# EUROPEAN PATENT APPLICATION

(11) **EP 2 728 476 A2**
(43) Date of publication of application: **07.05.2014**
(21) Application number: 13189839.7
(22) Date of filing: 23.10.2013
(51) Int. Cl.: G06F 9/54

(54) **Connected devices**

(30) Priority: 02.11.2012 US 201213668078
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A server for connecting devices is disclosed, comprising: a network interface to enable connections of a plurality of devices with the server and one or more execution environments, each execution environment representing one of the plurality of devices, each execution environment running an operating system of the respective device and exposing an interface specifying capabilities of the device, wherein the one or more execution environments are persistently maintained by the server. Furthermore, a terminal device and a method for connecting devices via an online service are described.

## Description

### TECHNICAL FIELD

The present disclosure relates to a server which enables connections of a plurality of devices and to a method for connecting devices via an online service.

### BACKGROUND

Network environments typically enable individual devices to communicate with each other. For example, a personal computer may connect with another personal computer via a network or access data files stored on the other computer. Also, the personal computer may connect to a network printer in order to print a document. Typically, the devices have to be connected to the network in order to enable the interaction. Also, they have to understand the required communication protocols and execute dedicated software for controlling the other device, such as a driver for a printer.

Since the number of interconnectible electronic devices with sophisticated functionalities is increasing, management of such equipment is complicated. Also, existing technology is often difficult for users to apply and also may bear security risks. For example, for network printing, the user has to ensure that all necessary devices are online, have the respective drivers installed, and are running in order to, for example, print a page.

### SUMMARY

The present disclosure describes, for example, a server, a terminal device, and a method to improve connection of terminal devices in a networked environment. For example, a connected device that provides a set of capabilities is controlled by an operating system executed within an execution environment on the server or within an online service.

According to a first aspect of the present disclosure, a server comprises a network interface to enable connections of a plurality of devices with the server and one or more execution environments, each representing one of the plurality of devices. Each execution environment runs an operating system of the respective device and exposes an interface specifying capabilities of the device. Furthermore, the one or more execution environments are persistently maintained by the server.

A device may connect to the server via the network interface and may be associated with its respective execution environment. The operating system of the device running within the execution environment may control the entire operation of the device. Accordingly, the device may include only a reduced operational layer, such as a thin operating system, which may only be capable to establish or accept a connection of the device with the server via the network interface. The devices may therefore be regarded as peripheral devices providing a certain functionality and properties that are represented as capabilities of the device. Since much of the operating system functionality of the device is located on the server, the local processing on the device may be focused on the tasks required to establish, accept, and/or maintain connections with the server. After establishment of the connection, the device may be controlled via the server.

The execution environment may be implemented as a generic execution environment for any kind of terminal device and may further include an abstraction layer which represents the functionality and properties of hardware and/or software of the respective device. Furthermore, the execution environment exposes the interface, which specifies the capabilities of the device. The execution environment may provide access to the capabilities of the device irrespective of a current state of the device and may receive commands for its respective capabilities whether it is connected to the server or not, since the execution environment is persistently maintained by the server and, therefore, is accessible even if the device is not connected to the server. If capabilities of a device, which is currently not connected to the server, are accessed, the execution environment may inform the accessing entity about the current network state of the device and/or may buffer or otherwise temporarily store the commands for the respective capability until the device is connected to the server.

The server may enable connections with a broad variety of terminal devices, such as electronic devices that are capable of connecting to the server via a network, as will be described in more detail below. Since the operating systems of the devices are executed on the server, the devices may be virtually always online and may be tracked and accessed via the server. Furthermore, the server provides an abstraction of the capabilities of the devices by exposing the interface of each respective device in order to simplify access to the capabilities. Since the operating system of the device is executing on the server, the layer representing the server is not located at a data level but at a lower level, such as hardware level. Once the device is connected to the server, it may be accessed from other entities without the requirement of installing drivers or being physically connected to the device.

According to an embodiment, the execution environment of a device provides access to the capabilities of the device. The capabilities may be any kind of functionality of a device, such as capabilities related to particular hardware components of the device for input and output of data or functional capabilities, such as a certain computational specialization. For example, the interface exposed by an execution environment representing a printer may specify the capability of the printer to print images, photographs, and/or documents. As another example, an interface may specify capabilities of a scanner including scanning of documents, a maximum size of the original, a color resolution, and other parameters. The interface may specify which capabilities are accessible from which other devices. For example, there may be a capability which is accessible to any other device, and there may be other capabilities which may only be accessed from a restricted group of other devices.

In yet another embodiment, the server further comprises a management component to link an execution environment of a device with a further execution environment of a further device, thereby providing access to the capabilities of the device via a further device. Accordingly, communication between devices and respective sharing of data may be entirely provided at server level and, in particular, no further communication between the respective devices may be required. Accordingly, even though a device may be offline, it may remain accessible due to the execution environment running on the server. The respective devices need only be online and directly connected with the server if a response directly from the device is required.

In a further embodiment, the execution environment of a device executes one or more applications for the device. Accordingly, the entire application logic of the device may be relocated to the server. The applications need not be aware of the fact that they are executed within an execution environment on the server, since the operating system and the execution environment reflect the operation of the device. Whenever the device is connected to the server, the device may be updated to the current state of the applications and the operating system by the execution environment. For example, internal states of the device may be set according to respective states maintained in the execution environment. The execution environment may also trigger any of the capabilities of the device and execute any postponed processing.

In yet another embodiment, the execution environment of a device is configured to generate output data related to a capability of the device in response to execution of the operating system. The output data may be transmitted to the device via the network interface and may include control data for the capability, such as hardware commands to trigger certain functionality of a hardware component of the device, configuration data to set up a certain hardware component of the device, and other control data for respective hardware modules and components of the device. The output data may also include data which is renderable by the device. For example, the output data may include an audio and/or video stream, which is directly streamed by the execution environment to the connected device. The device may render the audio/video data on respective output hardware components. Further data and other types of data may also be provided as output data, for example, printable data, haptic data, or force-feedback data, which may be provided on respective input/output devices.

According to another embodiment, the output data is provided as input data to an execution environment of another device. Accordingly, devices may access each other via their respective execution environments provided on the server. For example, a gaming device may provide a game experience to a user; however, the entire operating system of the device and the respective game application may be executed on the server within the corresponding execution environment. Furthermore, the output of the game application may be provided on another display device, which may also be connected with the server and represented by another execution environment on the server. Hence, the output of the execution environment representing the gaming device, which may include an audio/video stream, may be fed into the execution environment of the display device, processed accordingly and directly provided as output data to the display device. The processing within the execution environment of the display device may, for example, include encoding and transcoding of the video stream to a format understood by the display device, applying compression algorithms, adjusting a data rate based on network conditions, and other suitable operations. However, it is to be understood that the output of the execution environment of the gaming device may also be directly passed or looped through the execution environment of the display device as output data for the display device.

In yet another embodiment, the network interface is further configured to receive input data from a connected device and to provide input data to the execution environment of the connected device. For example, the connected device may include input hardware which may enable a user to generate certain input, for example, typing a certain character or text, pointing to or selecting items, or any other suitable interaction, such as providing sensor data related to a location, absolute position, orientation, velocity, temperature, and others. For example, a device may include a touch screen. The respective execution environment may stream visual data as output data to the device, which may be directly displayed on the touch screen. In addition, a user may interact with the touch screen and thereby generate data related to position, direction, and/or force of the touch or a gesture, and this data may be directly transferred to the execution environment of the device. Within the execution environment, the operating system may receive the input and either directly process the input or provide the data to an application that has provided the respective output data. The device may, furthermore, include a sensor, such as a GPS receiver, and the GPS data may be directly provided to the respective execution environment and further processed by the operating system.

In another embodiment, the management component is further configured to register a new device with the server, thereby generating an identification for the new device and creating an execution environment for the device. As soon as a new device accesses the network interface of the server, the server may recognize that no corresponding execution environment is maintained on the server and may, therefore, pass the processing to the management component. The management component may communicate with the device and may analyze the device type and its capabilities. It may generate an identification (ID) for the new device, which may be a unique ID, such as a combination of one or more random numbers with device-specific data or data related to the time of the first connection of the device with the server. If the device or at least some of the capabilities are supported by the server, the management component may create a new execution environment for the device and may set up the execution environment to reflect the processing and the capabilities of the device. In particular, the management component may select a suitable abstraction layer for the hardware of the device and may select a suitable operating system for the device. As soon as the execution environment is set up, the management component may trigger the execution of the operating system within the execution environment. Thereafter, if the device re-connects to the server, a link to its execution environment is automatically established. In order to determine a suitable operating system and abstraction of hardware of the device, the server may include or have access to a database including respective software and descriptions. However, devices compatible with the server may also include a storage medium including the necessary software and descriptions which may be uploaded to the server and executed therein. The device may also send to the server a further identification or link identifying a resource in a network, which may be accessible by the server in order to retrieve the necessary data.

According to another embodiment, the management component may be configured to automatically link devices associated with one user of the server to each other. The server may maintain an online service, such as a cloud-based network, a social network, a gaming environment, and similar online services. Each user may access the online service using a plurality of devices, which may thereafter be either implicitly or explicitly assigned to the user. The management component may receive the respective information about the user and his or her devices from the online service and may automatically link or connect the execution environments representing the devices of the user with each other. The user is not restricted to using and/or accessing his or her devices only. Rather, the user may link to any other device connected to the server or online service, for example, by sending a corresponding request via the server or online service. The request may be processed and forwarded to the user operating the requested device. The online service may also check a database or apply a rule-based system to determine if access to the device may be directly granted or if the user has to confirm the particular request.

While embodiments of the server have been described with regard to particular features of the respective embodiments, it is to be understood that the features of any embodiment of the server may be combined with features of one or more other embodiments of the server in any combination.

According to another aspect of the present disclosure, a terminal device comprises a network interface, a set of capabilities provided by the terminal device, and a processing component executing an operating layer to enable a connection with a server via the network interface and to exhibit the set of capabilities. The set of capabilities is controlled by an operating system executed within an execution environment representing the terminal device, wherein the execution environment is persistently maintained on the server.

The operating layer may be a part of an operating system executed on the device that provides additional functionality, or the operating layer may be executed on the device without or independent of an operating system that provides such additional functionality, such as in a thin operating system. Therefore, the operating layer preferably includes functionality to access the network interface and to establish and/or accept a connection with the server and, further, to receive data from and to transmit data to the server via the connection. Furthermore, the operating layer may also include a security component, which may provide for encryption of the data sent to the server and decryption of the data received from the server. Preferably, the operating layer may establish a secure channel to the server.

The terminal device may be any kind of electronic device, such as a personal computer, a laptop computer, a tablet or pad device, a mobile device, a smart phone, and other electronic devices. The terminal device may also be any kind of peripheral device, such as a printer, a display device, a scanner, a data store, a GPS receiver, and any other input/output device including a plurality of sensors capable of generating input data and/or output components capable of rendering output data in any modality, such as audio, video, and haptic data, to name a few.

The terminal device may also include a limited amount of hardware and need not include multi-purpose processing components. Rather, the terminal device may include a low cost processor, which may only be capable of executing the operating layer and controlling the network interface and the hardware components representing the capabilities of the device. In particular, the terminal device need not include storage media, such as a hard disk or flash memory, or any further sophisticated hardware. Accordingly, the terminal device may be a dumb terminal with respect to some kinds of functionality, in which the terminal provides access to functionality without necessarily having the components that provide the functionality on the terminal itself.

According to an embodiment of the terminal device, the terminal device may be configured to receive output data from the execution environment maintained on the server, which may be related to a capability of the device and transmitted to the device via the network interface of the server.

Furthermore, according to another embodiment, the output data may include control data for the capability and/or data which may be rendered by the device, such as an audio and/or video stream, which may be rendered on a respective output hardware of the terminal device.

In yet another embodiment, the terminal device may transmit input data to the respective execution environment of the terminal device executed on the server.

Further to the embodiments described above, it is to be understood that embodiments of the terminal device may comprise any features of one or more embodiments of the terminal device described above in any combination. Furthermore, embodiments of the terminal device may include any features of one or more embodiments of the server in any combination. Accordingly, embodiments of the terminal device may enable a connection with a server according to embodiments of the present disclosure, as described above. In addition, a system according to the present disclosure may include a server according to an embodiment and a plurality of terminal devices according to embodiments of the present disclosure.

According to yet another aspect, a method for connecting devices via an online service is provided. In the method, connections of a plurality of devices are accepted and, for each device, an execution environment representing the device is provided. Within each execution environment, an operating system of the device is run and an interface specifying capabilities provided by the device is exposed. The execution environments are persistently maintained.

According to an embodiment, the method further comprises the step of linking a device of the plurality of devices with a further device of the plurality of devices, thereby providing access to the capabilities of the device via the further device.

According to another embodiment, the method further comprises executing, within an execution environment of a device, one or more applications for the device.

In yet another embodiment, in at least one of the execution environments representing a device, output data related to a capability of the device are generated in response to execution of the operating system. The output data may also be generated in response to execution of the one or more applications for the device within the execution environment.

In yet another embodiment, the output data is transmitted to the device and/or may also be provided as input data to an execution environment of another device.

According to an embodiment, input data is received from a connected device and provided to the execution environment of the connected device.

In a further embodiment, whenever a new device is registered with the online service, an identification for the new device is generated and an execution environment is created for the device. Preferably, the execution environment is set up based on features and parameters as well as capabilities provided by the device.

In yet another embodiment, devices associated with one user of the online service are automatically linked to each other.

Even though embodiments of the method have been described with regard to particular features, it is to be understood that other embodiments of the method may include any features of one or more embodiments of the system, terminal device, and method described above in any combination.

According to a further aspect, a computer-readable medium has instructions stored thereon, wherein said instructions, in response to execution by a computing device, cause said computing device to automatically perform a method according to embodiments of the present disclosure. In particular, the computer-readable medium may be accessed by a computing device, such as a server according to one of the embodiments described above, which computing device may read and execute the instructions in order to automatically perform a method for connecting devices via an online service, according to embodiments of the present disclosure. Similarly, the computer-readable medium may be accessed and read by a configuration component and provided at the computing device to enable the execution.

In particular, in response to execution of the instructions on the computer-readable medium, the computing device may be configured to accept connections of a plurality of devices; provide, for each device, an execution environment representing the device; and run, in each execution environment, an operating system of the device and expose an interface specifying capabilities provided by the device, wherein the execution environments are persistently maintained.

### DESCRIPTION OF THE DRAWINGS

The specific features, aspects, and advantages of the present disclosure will be better understood with regard to the following description and accompanying drawings where:
- Figures 1A and 1B: show a terminal device according to one or more embodiments;
- Figure 2: shows a flow chart of a method according to one or more embodiments;
- Figures 3A to 3C: show terminal devices connected to execution environments provided on a server according to one or more embodiments;
- Figure 4: shows a network environment wherein terminal devices are connected to a server according to one or more embodiments;
- Figure 5: shows an interface provided by a server according to one or more embodiments; and
- Figures 6A and 6B: show further interfaces provided by a server according to one or more embodiments.

### DETAILED DESCRIPTION

In the following description, reference is made to drawings which show by way of illustration various embodiments. Also, various embodiments will be described below by referring to several examples and use cases. It is to be understood that the embodiments may include changes in design and structure without departing from the scope of the claimed subject matter.

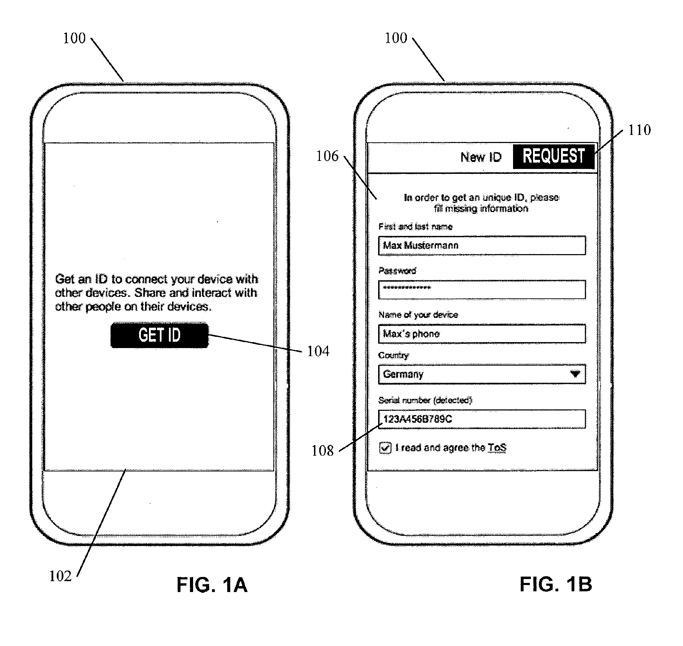

Figures 1A and 1B show a terminal device according to an embodiment. The terminal device 100 may connect via a network to a server in order to access an online service provided by the server and to link or connect the terminal device 100 with other devices. The terminal device 100 may, for example, be an electronic device including a display 102, which may be a pressure-sensitive touch display or the like to enable both output and input of data. The terminal device 100 may run an application which enables a user to connect to the server. For example, the terminal device 100 may display an interactive element 104 which may enable the user to request an identification (ID) for the terminal device. In particular, the user may be registered at an online service and may connect to the server in order to enable further interaction with the online service. The user may also connect all of his or her terminal devices with each other in order to establish a secure peer-to-peer communication link between the devices within the online service.

Online services, such as social networks, gaming environments, cloud-based services, as well as user networks, gaming networks, online platforms, online systems, communication and networking sites, and other systems and interfaces, which may be accessible via a network by a plurality of users operating client devices or other remote terminals such as the terminal device 100, enable users to share online content within the online service and to participate in activities provided by the online service. For example, each user may be connected via a client device with at least one server hosting the online service. The respective server may provide the user with one or more interfaces that may be provided or displayed on the client device or terminal, such as on the display 102, and allow the users to interact with the online service. The user may apply any interaction technique available on his or her client device, such as a mouse interaction, keyboard interaction, gesture or touch recognition, and the interaction input may be transferred to the server where it may be further processed in order to initiate a certain action. Also, the input may be at least partially processed on the client device, in order to provide the server with commands or instructions on how to further proceed. The devices can be any type of electronic equipment, such as telephones, smart phones, personal computers, printers, TV sets, and the like. Each device, which is connected to the server, is represented through a respective execution environment, which provides a unified interface that allows the same network to be used with any connected device.

As shown in figure 1B, after requesting an ID, for example, by triggering the interactive element 104, the online service may require the user to identify the device, for example, by providing information about the user. For example, the user may have to log in to the online service through his or her account using a name and password combination. In addition, the user may be asked to specify a name for the device as shown in an upper section 106 of the interface. Furthermore, the application installed on the terminal device, such as a thin operating system or any other application, may retrieve a unique device ID 108, which could be, for example, based on a MAC ID of the device or any other available unique ID. The unique device ID 108 may identify the device and link the device with the respective execution environment. Furthermore, a location, country, or any other geographical area can be assigned to the device. The interface may furthermore include another interactive element 110 which may be triggered by the user to request the ID.

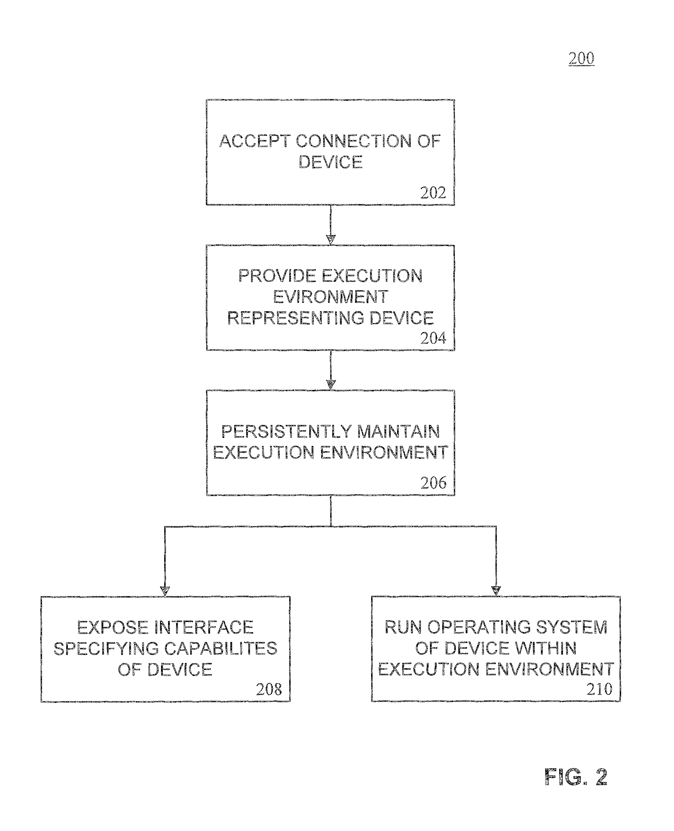

Figure 2 shows a flow chart of a method according to an embodiment. The method 200 enables connection of terminal devices via an online service, such as the terminal device 100 shown in figures 1A and 1B. The method 200 starts with accepting a connection of one or more devices in step 202. For example, a user may utilize a smart phone or any other terminal device to connect to the server and request an ID for the smart phone in order to register the smart phone at the server. In step 204, an execution environment representing the device may be provided. After providing the execution environment in step 204, the execution environment may be persistently maintained in step 206. In particular, the execution environment may comprise an interface which specifies the capabilities of the device and which is exposed in step 208. Furthermore, the execution environment may include an operating system of the device which is executed in step 210. Accordingly, each connected device may be associated with an execution environment, which exposes capabilities of the device and persistently maintains an abstraction of the device online.

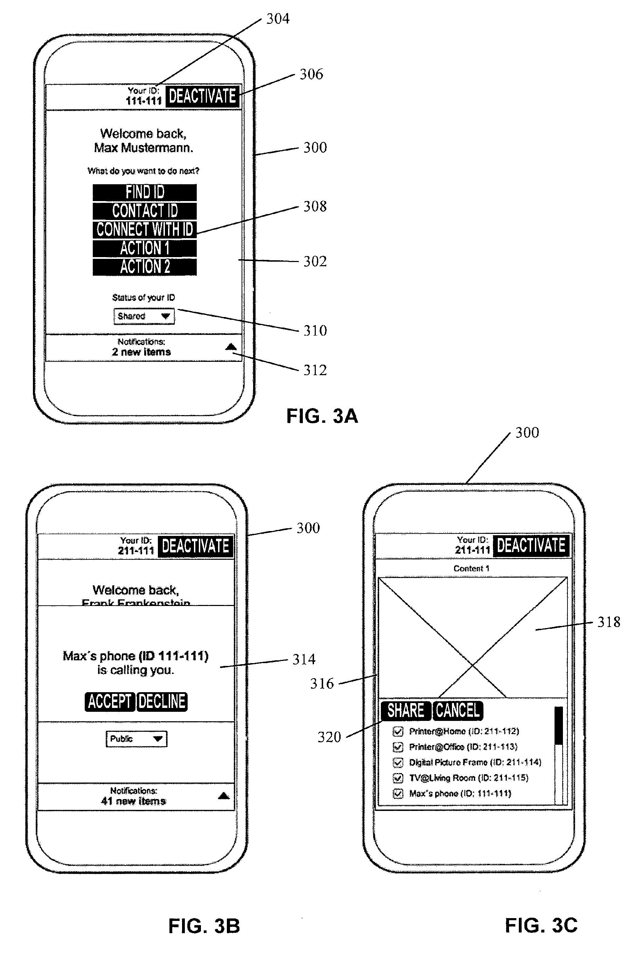

Once a terminal device has been connected with a server, the terminal device may directly connect to the respective execution environment maintained on the server. Figures 3A to 3C illustrate terminal devices according to an embodiment. As shown in figure 3A, the terminal device 300 may connect to the server, which may provide an interface 302 on a display of the terminal device 300. The interface 302 may show a unique ID 304 of the terminal device 300 which directly links the terminal device 300 to the respective execution environment on the server.

The execution environment may also store several parameters related to a status of the connected device. For example, the device may be deactivated and access to its capabilities may be restricted to a certain group of devices or users of the online service. Accordingly, the interface 302 may include an interactive element 306 which may be triggered in order to deactivate the terminal device 300. According to an example, a deactivated terminal device cannot be accessed via the server from other devices. Yet, the execution environment may still be persistently maintained on the server. Accordingly, the terminal device may be re-activated whenever required.

The interface 302 may further list possible actions for the device in a list 308 including respective interactive elements. For example, the user can search for other devices, which may be linked or connected to the terminal device 300. Furthermore, the user may enter a unique ID of another device to directly connect to it. Further to general management actions, other actions may be dependent on the capabilities and/or features of the terminal device 300.

The user may be able to change a status of the terminal device 300 by triggering another interactive element 310. The status may define a current mode of utilization of the terminal device 300 within the online system, similar to deactivation of the terminal device 300 using interactive element 306. Examples of a status may include at least one of "deactivated," "hidden," "limited," "shared," "public," etc. In particular, the status of the device may define who else may be able to find or connect to the terminal device 300.

Since the execution environment of terminal device 300 is persistently maintained on the server, any messages or notifications for the device 300 may be processed and stored within the execution environment without requiring the terminal device 300 to be online or connected with the server. The interface 302 may include a section 312 which enables the user to view notifications sent by other devices or users as soon as the terminal device 300 is connected to the server. The notifications may be sent with a unique ID of the sending device and a user name of the sender.

Figure 3B shows a terminal device according to an embodiment, similar to the terminal device 300 of figure 3A. For example, another user of the online service may access a capability of the terminal device 300 and start an action with the user's device, for example, a phone call, which may be indicated by displaying another interface 314. The user of the terminal device 300 may see who is calling and may be provided with at least two options on how to further proceed with the incoming request or call. According to an example, the terminal device 300 may have the capability of accepting incoming phone calls, which may be exposed in the interface of the corresponding execution environment.

Figure 3C shows a terminal device according to an embodiment, similar to the terminal devices 300 shown in figures 3A and 3B. The terminal device 300 may show another interface 316 which may include a rendering of online content 318, which the user desires to share with other devices. In order to share the content 318, the user may open a share menu by triggering interactive element 320 and may select the devices intended for sharing of content 318. Depending on what kind of actions the other devices are capable of, the resulting action can be different for each device. For example, a TV device may "share" video content by displaying it, a printer may print a shared picture, and a digital picture frame may store a picture and display it.

The kind of action need not be specified when a particular content is to be shared. Rather, the server or the online service may determine a suitable action, which may be defined by the respective capability exposed by the execution environment. The action may be defined by the capabilities of the terminal device that receives the shared content. According to an example, any devices linked or connected to the terminal device 300 may be listed in interface 316 and process the shared data according to respective rules. However, according to another example, if the device cannot process the content, it need not be listed in the group of shareable devices.

The actions and capabilities exposed for respective terminal devices may depend on permissions set by the owner of the terminal device. Subject to these owner permissions, the actions, functions, and capabilities of the devices can be accessed, used, and activated by other users operating other connected devices linked within the online service. Typical actions may include one or more of:
- Share content: The user of one device can share content via his or her device to any other device that the user has permissions to connect within the network. The other device may process the content in different ways, depending on the functionality of the device.
- Send a message: The user may send a message (including data such as text, video, image, and/or other message data) to any other accessible device. The type or content of the message may depend on the capabilities of the sending device, the receiving device, or both sending and receiving devices.
- Activate functionality: A user may use a certain capability of one device while interacting with another device, thereby splitting or enhancing functionality or output of an application among multiple devices. For example, the user may use his or her mobile phone as a game controller (e.g., while running a video game on the mobile phone) and display the game on a connected TV (rendering the game on the TV) with a larger display area. Furthermore, the user may open a text file on a device and display the text file on another connected device, for example, on a connected TV. Devices can also choose other devices for exchange of data, such as sharing, streaming, computing, and other contexts in which data is exchanged. Thereby, the other devices may be engaged in joint computation or execution of tasks.

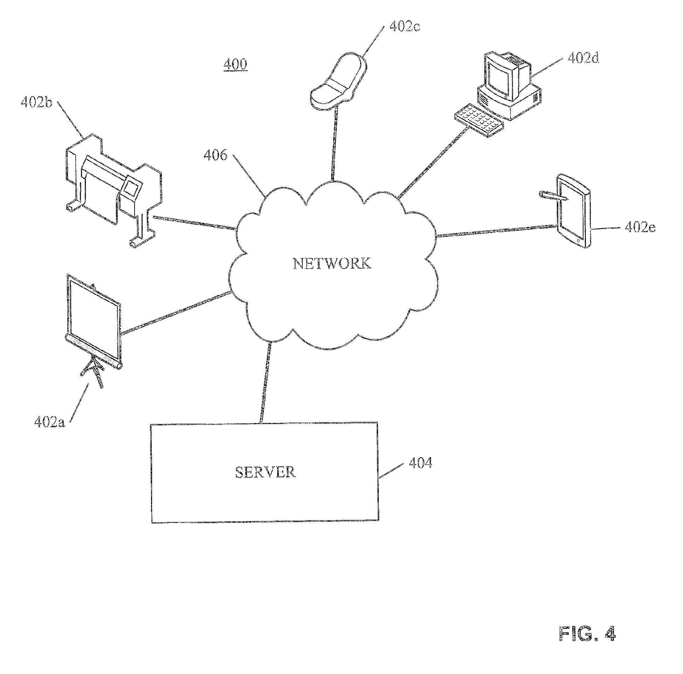

Figure 4 shows a schematic illustration of a network environment according to one embodiment. The network environment 400 enables a plurality of terminal devices 402a 402e to connect with a server 404 via a network 406. The terminal devices 402a 402e may, for example, include a large screen projection device 402a, a printer or plotter 402b, a mobile phone 402c, a personal computer 402d, or a tablet device 402e. Each terminal device 402a 402e includes a network interface which enables a connection to the network 406. Furthermore, each terminal device 402a 402e includes a processing logic which is capable of establishing and/or maintaining a connection to a server 404 via the network 406. The network interface may provide a connection to the network 406 via a wired line or a wireless connection using any suitable transmitting and networking technology, such as RF devices, wireless LAN, and others. The network 406 may be any network suitable to connect electronic devices with each other, such as a local area network (LAN), a wide area network (WAN), the Internet, a dedicated Ethernet connection, or any other suitable networking technology or standard.

Each terminal device 402a 402e may connect to the server 404 and initially signal to the server the available capabilities of the respective terminal device. Based on the type of the terminal device and the capabilities, the server 404 may set up a generic and unified execution environment for one or more of the terminal devices 402a 402e which is persistently maintained on the server 404. Furthermore, the execution environment may be configured for the respective terminal device 402a 402e using a hardware abstraction, a dedicated operating system, and an interface which exposes the capabilities of the respective terminal device.

Capabilities of a terminal device 402a 402e may be any suitable processing or hardware functionality of that device. For example, the projection device 402a may expose a capability of displaying images and video data. The printer 402b may expose a capability of printing documents. Yet, the printer 402b may also expose the capability of displaying image data on a control display. Similarly, the printer 402b may be a multifunction printer, which may also expose the capability of scanning documents and sending documents via a fax line. The mobile phone 402c may, for example, expose the capability of displaying image and video data, rendering audio data, forwarding text data as messages via a mobile network, and providing input (e.g., a numeric input). Likewise, the personal computer 402d may provide a set of capabilities directed at various input and output functionalities of the personal computer 402d and possible peripheral connected to the personal computer 402d. The tablet device 402e may receive input via a device such as a pen, and also may include sensors and a touch sensitive display and, therefore, may provide gesture input as well as sensor values, such as a GPS value from a GPS receiver and other indications.

After instantiation of an execution environment for one or more of the terminal devices 402a 402e, the server 404 may provide a wide range of functionalities for interconnecting the terminal devices 402a 402e with each other. In addition, users operating the terminal devices 402a 402e may register with an online service on the server 404 and may add their terminal devices to their account. Accordingly, users can communicate with their own devices and use the capabilities of these devices. Likewise, users can also connect and communicate with devices of other users.

Users may also be able to receive multiple layers of content, also called shares, such as a game render from user A, a video message from user B, and a text message from user C, each operating respective terminal devices 402a 402e.

For each device associated with a user account, the system may create a persistent and unique device ID which may be mapped to the user ID of the user. This can, for example, be accomplished through a MAC ID or any other available unique ID of the device. This mapping provides the server 404 with the knowledge that a specific terminal device is owned by a specific registered user, who may also be referred to as the owner of the terminal device.

In addition, the server 404 enables the users to share terminal devices 402a 402e on an ad hoc or one-off basis. For example, user A may invite a friend, such as user B, to play a video game with user A at one location. The video game may be an application which may run on a mobile phone of user B or which may be executed within an execution environment of the mobile phone of user B and accessed via the mobile phone. User B may link or connect to another terminal device, which may be a TV set of user A, and may configure the game application to render the output of the video game on the TV set of user A. In order to link the mobile phone of user B with the TV set of user A via the server, either user A or user B may log in to the online service using the terminal device and either search for the other device or input an identification of the other device. Any other suitable technology for establishing connections can be used, such as QR codes, near field communication (NFC), pairing of devices, RF ID, scrambling codes, and proxy codes, to name a few. For example, the ad hoc sharing could be controlled by the owner of the TV set, which is user A, through an in-menu control provided on the TV set. Furthermore, the owner may set timeouts and other permissions and restrictions for the linking of the mobile phone and the TV set.

When a terminal device is first registered with the server 404, the terminal device may tell the server 404 which communication protocol it will use for the transmission of data. For example, any of the terminal devices 402a 402e may use WLAN, WiFi, 3G, 4G, Bluetooth, or other protocols. If terminal devices are linked or connected to each other, the server 404 may set up a secure peer-to-peer channel between the terminal devices via their respective execution environments. Thus, when a user intends to share a stream content from one device with another, a secure channel or trusted device connection may be created and a direct communication link between the terminal devices may be thereby authenticated.

The access to the respective terminal devices 402a 402e may be handled by permissions that may be granted and managed by the owner of a device, and the particular association of a user with a terminal device. The association may be facilitated through a mapping of the unique device ID to the user ID and subsequent storage of the association in a database accessible by the server 404.

The terminal devices 402a 402e may be categorized as active devices and passive devices. Active devices may be able to run applications and software which may be necessary to actively connect to the server. These devices provide a direct interface to the server 404. Passive devices may be terminal devices that may not be able to run software necessary to initiate a connection with the server. Passive devices may be connected indirectly to the server 404 via an active device (using the active device as a proxy), or may be connected directly via a proprietary application with the server 404.

The capabilities of each terminal device 402a, ..., 402e may be defined by specific actions, which can be initiated by the user operating the terminal device or via other terminal devices linked to the terminal device.

Furthermore, each terminal device 402a, ..., 402e may have a status, which may define, for example, who is allowed to find the device and who can connect or link to the device. Certain actions may have further layers of permissions. For example, any user may be allowed to connect to a terminal device, such as the printer 402b, while only registered users or users with certain permissions may be allowed to print documents on the printer 402b. The status may, for example, include one of:
- Deactivated: The device is not accessible in the network 406.
- Hidden: The device may be active, but other users cannot connect to the terminal device.
- Limited: The terminal device can only be found and connected to by a limited group group may be defined by the owner of the terminal device.
- Shared: The device can be found and connected to by all users that have the "share permission" of the owner.
- Public: The device can be found and connected to by anyone in the network.

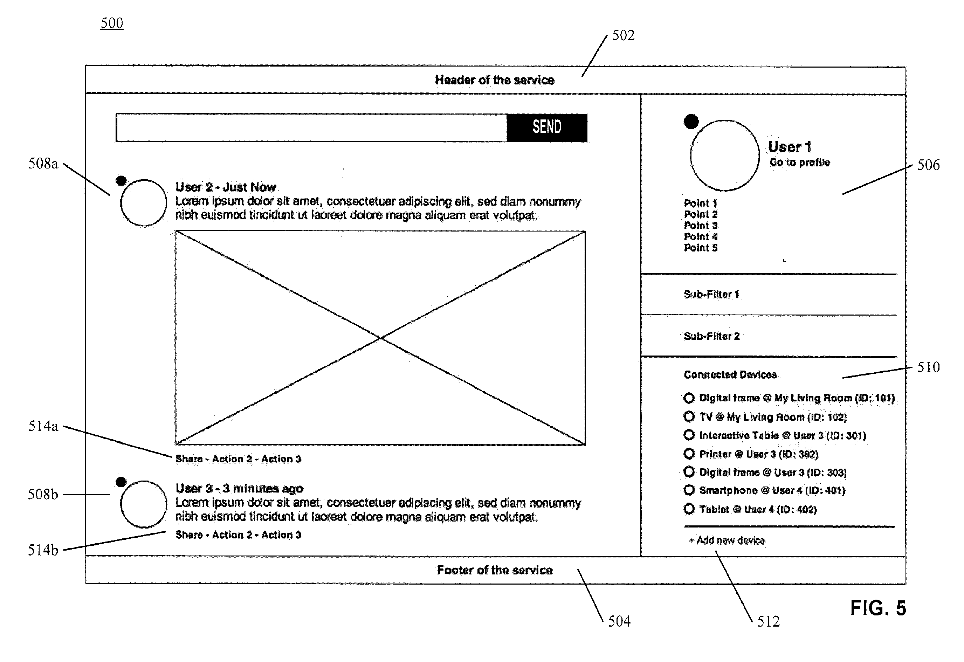

Figure 5 shows an interface provided by an online service hosted on a server such as the server 404 of figure 4. A user may connect to the server operating a terminal device, such as one of the terminal devices 402a 402e of figure 4. The user interface 500 may be represented as a page of a social network. The page may comprise a header 502 and footer 504 providing information related to a currently used service of the social network. Furthermore, the page may comprise information about the user, providing a user name and other identification, such as an image of the user, and various further services of the user, such as filters for content in section 506. The user interface 500 may also show a list of content items 508a, 508b representing online content and activities provided by the social network, such as media files, posts, feeds, representations of users, representations of groups of users, and others. Each content item 508a, 508b may be represented by a seed, specifying a title of the content, a time or time range, a thumbnail of the content, representation of the related user, such as the user who has uploaded or posted the content, and other related data. A seed refers to a container for online content, which may be used to represent content data within the online service, a related cloud, or a server environment in a way, which enables a unified management and handling of the content data. Each seed stores the respective online content, as well as basic parameters or meta data and additional parameters or meta data. A seed may be persistent in time and may grow in size.

The meta data attached to each seed may define who is allowed to interact with the seed, what the seed is allowed to do, who created the seed, and other information for handling and interacting. A respective management system may, therefore, analyze the meta data in order to determine suitable actions for the seed, which may be automatically provided to users of the online system in conjunction with the seed.

Basic parameters or meta data of a seed may include at least one of a unique ID, an identification of a user, who created the seed, as well as a list of recipients that may be other seeds addressed by the seed, such as a single recipient seed or a group of recipient seeds, an indication of the type of the seed, as well as an indication of actions which are assigned to the seed, such as social or content-based actions, and combinations thereof. Further basic parameters may include an identification of an owner, which may be the current user managing the seed, link and connect permissions, a status of the seed within the online system, a future date, which may define when the seed will be visible online, an expiration date, other suitable information, and combinations thereof.

A seed can be related to other seeds, such as parent, child, and neighbor seeds or other hierarchically or technically organized relationship structures. Seeds may be coupled to each other within the online system via links, connections and/or shares. For example, if a user links to a seed, the user may establish a passive, asymmetrical link to the seed. The user will be notified about any changes and/or updates of the linked seed. A connection to a seed establishes a symmetrical connection to the seed, where both seeds, the seed representing the user connecting and the seed being connected, are aware of the connection. Furthermore, a user can define that a seed is to be shared with certain target seeds representing, for example, other individual users or a group of users. For example, a user may desire to share the content of his/her seed with a certain group of other users of the online system. In addition, seeds may be coupled across one or more online systems, servers and clouds using one or more seed servers, which may be provided by different seed-server operators.

Each seed may explicitly allow particular users to perform certain actions as defined by the basic parameters, for example, content actions directed at a use of the seed content, and social actions directed at an initiation of social interactions with the seed. Hence, an element representing an offer according to an embodiment may, for example, be created as a seed which may be stored and managed by a corresponding online system and which may enable users to interact with the element.

The user interface 500 may also include a section 510 which may include a list of devices linked to the user as well as device IDs of devices that are available for connection. In addition, the user interface 500 may comprise an interactive element 512 which enables the user to add further devices to the list of connected devices 510.

For each content item 508a, 508b, the user interface 500 may include further interactive elements 514a, 514b, which may be triggered by the user to share the respective content or perform other actions via one of the connected devices of the list 510, as will be described in greater detail below.

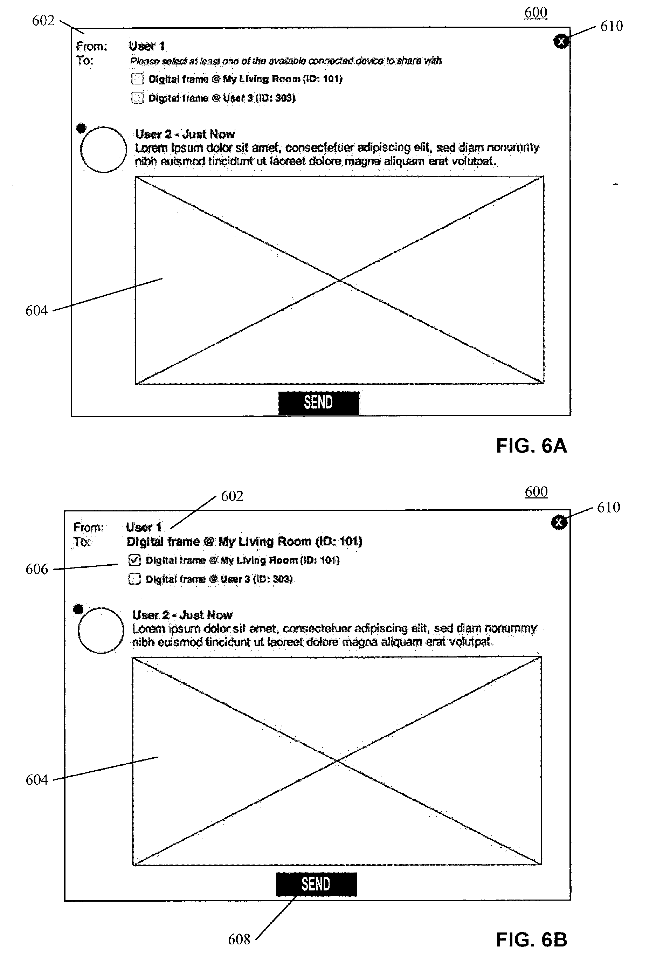

Figures 6A and 6B show another interface, which may be generated by the server after a user has initiated sharing of content via connected devices, according to an embodiment. For example, the user may have triggered one of the interactive elements 514a, 514b of the user interface 500 shown in figure 5. The user interface 600 may display the name of the user who has initiated the sharing and may further enumerate the connected devices that are capable to receive the content, in section 602. In addition, the user interface 600 may provide a rendering or a preview of the shared content in section 604. The user may select one of the connected devices, for example, by interacting with a tick box 606. The user interface 600 may also include an interactive element 608, which may be used by the user to confirm sharing of the content, as well as interactive element 610, which may be used to cancel sharing. After selection of at least one of the connected devices using the tick box 606 in section 602 and confirming the selection via interactive element 608, the execution environment of the respective device may be linked and the respective content is provided at the selected connected device.

In response, the selected connected device may further display information regarding the sender, which may also include a message and other additional information.

Further embodiments will be described below by referring to several examples and use cases.

In a use case, a user may send data home from his or her current location. The user may take a photograph using a smart phone and may want to send the photograph to a digital photo frame, which may be located at the home of the user. The user may select the digital photo frame from a list of registered devices on the smart phone and then send the photograph via the smart phone to the digital photo frame.

Accordingly, the smart phone and the digital photo frame may be connected terminal devices registered at a server according to an embodiment. The user may establish a connection to the server via the smart phone and may share the content of the smart phone with the digital photo frame via the server.

In another use case, a user may expand his or her identity through device sharing. A social network may expand a user identity through the connections made with friends and associates. However, the expansion of the identity of a user may primarily be achieved by addition and connection to other connected devices, which may have capabilities that the user would normally have no access to. For example, a user may not own an expensive piece of equipment such as a large format plotter, a high-quality laser printer, or the latest 3D TV. The user may connect to a server according to an embodiment using a terminal device and search for respective other terminal devices providing the required capabilities.

According to yet another use case, a user may split functionality or output of an application among multiple devices. User A may be running a video game on his or her mobile phone and may be visiting a friend's house. A television set of the friend may be a registered device on the mobile phone of user A. User A may select the television set of the friend as a display medium and thereby split the functionality of the mobile application between a controller, which is represented by the mobile phone, and a screen device, which is represented by the television set of the friend. After linking both terminal devices via a server according to one or more described embodiments, user A may configure the application via the mobile phone and the display of the output of the application on the television set.

While some embodiments have been described in detail, it is to be understood that aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A server comprising:
a network interface configured to enable connections of a plurality of devices with the server; and
one or more execution environments, each of the one or more execution environments representing one of the plurality of devices, wherein each of the one or more execution environments is configured to run an operating system of the respective device and expose an interface specifying capabilities of the device,
wherein the one or more execution environments are persistently maintained by the server.

2. The server of claim 1, wherein the execution environment of a device is configured to provide access to the capabilities of the device.

3. The server of claim 1 or 2, further comprising a management component configured to link an execution environment of a device with a further execution environment of a further device and provide access to the capabilities of the device via the further device.

4. The server of claim 3, wherein the management component is further configured to register a new device with the server, thereby generating an identification for the new device and creating an execution environment for the device.

5. The server of claim 3 or 4, wherein the management component automatically links devices associated with one user of the server to each other.

6. The server according to one of the preceding claims, wherein the execution environment of a device is further configured to execute one or more applications for the device.

7. The server according to one of the preceding claims, wherein the execution environment of a device is further configured to generate output data related to a capability of the device in response to execution of the operating system.

8. The server of claim 7, wherein the output data is transmitted to the device via the network interface, and/or includes control data for the capability, and/or is renderable by the device.

9. The server of claim 7, wherein the output data is provided as input data to an execution environment of another device.

10. The server according to one of the preceding claims, wherein the network interface is further configured to receive input data from a connected device and to provide the input data to an execution environment of the connected device.

11. A terminal device comprising:
a network interface;
a set of capabilities provided by the terminal device; and
a processing component executing an operating layer to enable a connection with a server via the network interface and to exhibit the set of capabilities,
wherein the set of capabilities is controlled by an operating system executed within an execution environment representing the terminal device, wherein the execution environment is persistently maintained on the server.

12. A method for connecting devices via an online service, comprising:
accepting connections of a plurality of devices;
providing, for each of the plurality of devices, an execution environment representing the device; and
running, within each execution environment, an operating system of the respective device and exposing an interface specifying capabilities provided by the respective device,
wherein the execution environments are persistently maintained.

13. The method of claim 12, further comprising linking a first device of the plurality of devices with a further device of the plurality of devices, thereby providing access to the capabilities of the first device via the further device.

14. The method of claim 12 or 13, further comprising generating, in at least one of the execution environments, output data related to a capability of the respective device in response to execution of the operating system, and transmitting the output data to the respective device, or providing the output data as input data to an execution environment of another device.

15. The method according to one of the claims 12 to 14, further comprising registering a new device with the online service, including generating an identification for the new device and creating an execution environment for the new device, and automatically linking devices associated with one user of the online service to each other.
